(19) **Europäisches Patentamt**
**European Patent Office**
**Office européen des brevets**

(11) **EP 3 579 191 B1**

(12) **FASCICULE DE BREVET EUROPEEN**

(45) Date de publication et mention
de la délivrance du brevet:
**09.12.2020 Bulletin 2020/50**

(51) Int Cl.:
***G06T 7/70*** *(2017.01)*    ***G06T 7/80*** *(2017.01)*

(21) Numéro de dépôt: **19315042.2**

(22) Date de dépôt: **04.06.2019**

(54) **ESTIMATION DYNAMIQUE DU TANGAGE INSTANTANÉ ET DU ROULIS INSTANTANÉ D'UNE CAMÉRA EMBARQUÉE DANS UN VÉHICULE AUTOMOBILE**

**DYNAMISCHE SCHÄTZUNG DES MOMENTANEN NICK- UND ROLLWINKELS EINER IN EINEM KRAFTFAHRZEUG EINGEBAUTEN VIDEOKAMERA**

**DYNAMIC ESTIMATION OF INSTANTANEOUS PITCH AND ROLL OF A VIDEO CAMERA EMBEDDED IN A MOTOR VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.06.2018 FR 1854827**

(43) Date de publication de la demande:
**11.12.2019 Bulletin 2019/50**

(73) Titulaires:
• **Continental Automotive France**
**31100 Toulouse (FR)**
• **Continental Automotive GmbH**
**30165 Hannover (DE)**

(72) Inventeurs:
• **Ferret, Gatien**
**31100 Toulouse (FR)**
• **Chochoy, Hugo**
**31100 Toulouse (FR)**

(74) Mandataire: **Maier, Stefan Josef**
**Continental Automotive GmbH**
**P.O. Box 22 16 39**
**80506 München (DE)**

(56) Documents cités:
**WO-A1-2015/160287    FR-A1- 3 028 989**
**FR-A1- 3 053 554    FR-A3- 3 043 824**

**Description**

La présente invention se rapporte de manière générale à l'optimisation de l'acquisition, par une caméra vidéo, d'informations relatives à l'environnement immédiat d'un véhicule automobile. Elle concerne plus particulièrement un procédé d'estimation dynamique du tangage instantané ou du roulis instantané d'une caméra embarquée dans un véhicule automobile.

L'invention trouve des applications, en particulier, dans les systèmes d'aide à la conduite de véhicules automobiles équipés de caméras frontales.

Les systèmes d'aide à la conduite automobile (ou ADAS, de l'anglais « *Advanced Driver Assistance* Systems ») sont de plus en plus répandus dans les véhicules automobiles actuels. Ils offrent un nombre croissant de fonctionnalités avec pour objectif d'améliorer le confort et la sécurité des utilisateurs de véhicules. A terme, il est envisageable de produire des véhicules à conduite autonome.

Nombre de fonctionnalités offertes par de tels systèmes s'appuient sur une analyse en temps réel de l'environnement immédiat du véhicule dans lequel ils sont embarqués. Qu'il s'agisse, par exemple, d'aider au freinage d'urgence ou d'améliorer le contrôle de trajectoire d'une voiture, la prise en compte à chaque instant de caractéristiques de l'environnement du véhicule est nécessaire pour assurer les fonctionnalités des ADAS.

Dans ce contexte, une des possibilités pour l'acquisition d'informations relatives à l'environnement immédiat d'un véhicule automobile est d'utiliser des moyens d'acquisition et d'analyse d'images. Un véhicule peut ainsi être équipé d'une ou plusieurs caméras vidéo destinées à observer son environnement, à chaque instant, dans une ou plusieurs directions d'observation. Les images recueillies par les caméras sont alors traitées par l'ADAS et celui-ci peut les utiliser pour potentiellement déclencher une action d'aide à la conduite (par exemple déclencher une alerte sonore et/ou visuelle, voire déclencher un freinage ou un changement de trajectoire du véhicule...).

Ce type de fonctionnement suppose que les images recueillies par la ou les caméra(s) permettent de déduire d'une manière fiable les informations pertinentes souhaitées sur l'environnement du véhicule, et avec un coût de calcul aussi réduit que possible. Cela implique notamment que les images acquises soient effectivement représentatives de la réalité observée et sans dégradations susceptibles de fausser la perception de l'environnement par l'ADAS. Cela implique aussi, pour certaines fonctionnalités, qu'il soit possible pour l'ADAS, à partir des images acquises par la caméra, de localiser correctement les divers objets présents dans l'espace tridimensionnel dans lequel le véhicule évolue.

C'est le cas, par exemple, dans la situation classique où l'ADAS exploite les images acquises par une caméra montée sur le pare-brise avant d'un véhicule, au niveau de son rétroviseur central. Cette exploitation présuppose en effet, pour certaines fonctionnalités, de connaître la relation entre les coordonnées spatiales d'un point de l'espace avec le point correspondant dans l'image acquise par la caméra qui suppose donc de connaître la relation spatiale unissant la caméra et le véhicule. Pour s'assurer de la bonne connaissance de ces relations, il est connu de procéder, plus ou moins régulièrement, à une calibration de la caméra. Cette calibration a pour but de déterminer des paramètres, dits paramètres intrinsèques et paramètres extrinsèques, de la caméra.

Les paramètres intrinsèques sont liés aux caractéristiques techniques propres de la caméra, comme par exemple, sa focale, la position de son centre optique ou sa distorsion. Leur calibration permet de compenser, au moins en partie, des défauts potentiels de fabrication de la caméra. Une telle calibration est donc réalisée en usine en fin de chaîne de production.

Les paramètres extrinsèques correspondent, quant à eux, au positionnement et à l'orientation de la caméra par rapport à un repère relié au châssis du véhicule et supposé, sous réserve d'une éventuelle inclinaison du véhicule par rapport à la route sur laquelle le véhicule circule, parallèle à ladite route. Ces paramètres comprennent les trois translations et les trois rotations nécessaires pour passer des coordonnées d'un point, exprimées dans un repère défini ci-dessus et appelé « repère monde », aux coordonnées de ce point exprimées dans un repère lié à la caméra appelé « repère caméra ». La calibration de ces paramètres (six au total) permet alors de compenser les éventuels défauts de positionnement ou d'orientation de la caméra par rapport à la route. De plus, s'agissant de paramètres amenés à varier plus fréquemment que les paramètres intrinsèques, la calibration des paramètres extrinsèques peut être opérée relativement régulièrement afin d'ajuster en permanence leurs valeurs à la situation constatée.

Finalement, la calibration de la caméra a pour objectif de faciliter l'exploitation des images acquises par la caméra afin d'améliorer la localisation dans l'espace des divers objets observés. Cette calibration fait d'ailleurs l'objet, que ce soit pour les paramètres extrinsèques ou pour les paramètres intrinsèques de la caméra, d'un grand nombre de travaux de développement visant notamment à améliorer sa précision ou sa rapidité d'exécution.

Malgré cela, quelle que soit la régularité avec laquelle la calibration peut être opérée, elle ne permet pas de suivre des changements d'orientation importants de la caméra dès lors qu'ils surviennent ponctuellement et rapidement. Typiquement, s'agissant de la variation de l'angle correspondant au tangage de la caméra, c'est-à-dire à son inclinaison vers l'avant ou vers l'arrière, ou de la variation de l'angle correspondant au roulis de la caméra, c'est-à-dire à son inclinaison vers la gauche ou vers la droite (ces termes étant utilisés en référence à la direction de déplacement du véhicule en marche avant), leur valeur ne peut être modifiée par calibration, pour que celles-ci ne soient pas dégradées par des erreurs ponctuelles, sur des échelles de temps relativement longues, de l'ordre, par exemple, de 1 degré par kilomètre parcouru. Par conséquent dans des situations telles que le franchissement d'un dos d'âne, une accélération ou une décélération importante, ou un changement de pente soudain, la valeur du tangage peut temporairement s'écarter, de façon significative, de sa valeur calibrée. De même, lorsque le véhicule roule sur un coussin berlinois ou un nid de poule de manière « asymétrique » (autrement dit lorsque seules les roues se trouvant d'un côté - droit ou gauche - du véhicule franchissent le coussin berlinois ou le nid de poule) la valeur du roulis peut temporairement s'écarter, de façon significative, de sa valeur calibrée.

Or la bonne connaissance de l'angle correspondant au tangage et de l'angle correspondant au roulis, a un impact déterminant sur la localisation dans l'espace des objets observés par la caméra frontale d'un véhicule automobile. Dès lors, sa mauvaise appréciation, même temporaire, est susceptible d'affecter la bonne détermination de la position des objets environnant le véhicule et donc de limiter voire de bloquer certaines fonctionnalités de l'ADAS qui reposent sur cette détermination.

Pour estimer le tangage instantané (que l'on désignera simplement par tangage dans la suite) et le roulis instantané (que l'on désignera simplement par roulis dans la suite) d'une caméra embarquée dans un véhicule de façon dynamique, c'est-à-dire de manière à apprécier les variations rapides liées à des changements ponctuels d'environnement de conduite (à cet égard, on peut parler d'appréciation en temps réel), on connaît déjà l'utilisation de la méthode de cartographie et localisation simultanées ou SLAM (de l'anglais « Simultaneous Localization And Mapping »). Cette méthode consiste, en premier lieu, à construire simultanément la cartographie d'un lieu et à s'y localiser. Elle peut par ailleurs permettre d'estimer le tangage et le roulis de la caméra en s'appuyant notamment sur le suivi, dans l'image, de certains objets remarquables et de leur déplacement d'une image à l'autre. Elle est toutefois largement sujette au bruit de détection et est relativement limitée en termes de fréquence à laquelle la valeur du tangage et la valeur du roulis peuvent être effectivement actualisées dès lors qu'une estimation robuste est l'objectif visé.

Par ailleurs, une autre approche connue consiste à traiter les images acquises par la caméra embarquée d'un véhicule pour y reconnaître, dans chaque image, la forme des lignes de marquage de la route sur laquelle le véhicule circule, et, pour en déduire, en temps réel, un ou des angles d'inclinaison de la caméra. Cette méthode peut permettre d'estimer dynamiquement le tangage et le roulis mais suppose de circuler sur une route ayant des lignes marquées et reconnaissables.

De plus, dans le cas des deux approches évoquées jusqu'ici, l'estimation de la valeur de tangage et de la valeur de roulis n'est performante que dans des cas où celles-ci restent suffisamment proches de valeurs attendues. Autrement dit, dès que l'amplitude de la variation du tangage est très grande (comme c'est le cas, par exemple pour le franchissement d'un dos d'âne ou pour une forte accélération) ou que l'amplitude de la variation du roulis est très grande (comme c'est le cas, par exemple pour le franchissement d'un coussin berlinois pour d'un nid de poule), les valeurs estimées par ces méthodes peuvent diverger et donc être fausses au regard de la vérité sur le terrain.

L'invention vise à supprimer, ou du moins atténuer, tout ou partie des inconvénients de l'art antérieur précités.

A cet effet, un premier aspect de l'invention propose un procédé d'estimation dynamique du tangage, respectivement du roulis, d'une caméra embarquée dans un véhicule automobile, une valeur de calibration du tangage, respectivement du roulis, $\theta_{calib}$ étant connue à chaque instant, ledit procédé comprenant :

- le calcul, à un instant t, d'une valeur de tangage estimé, respectivement du roulis estimé, par intégration $\theta_{int}(t)$ égale à $\theta_{calib}(0) - \int_1^t \theta_{rel}(x)\,dx$, où $\theta_{calib}(0)$ est la valeur initiale de calibration du tangage, respectivement du roulis, au démarrage de la caméra à un instant $t=0$, et où $\theta_{rel}(t)$ est la valeur de tangage relatif, respectivement de roulis relatif, à l'instant t, égale à l'angle de tangage, respectivement de roulis, formé entre l'orientation de la caméra à cet instant t et l'orientation de la caméra à un instant déterminé précédent t-1 ; et,

- la détermination, par calcul, de la valeur de tangage, respectivement de roulis, $\theta(t)$ à l'instant t telle que $\theta(t)$ est égale à :

$$\theta_{int}(t) + DAC(t) \times (\theta_{calib}(t) - \theta_{int}(t)),$$

où $\theta_{calib}(t)$ est la valeur de calibration du tangage, respectivement du roulis, à cet instant $t$, où $\theta_{int}(t)$ est la valeur calculée, à cet instant t, du tangage estimé, respectivement du roulis estimé, par intégration, et où $DAC(t)$ est un coefficient d'anti-divergence variable en fonction du temps tel que, à un instant t donné, $DAC(t)$ est égal à :

$$DAC_{max} \times \left(1 - \min\left(\int_{t-N}^t \frac{|\theta_{rel}(x)|}{\theta_{AMR}}\,dx, 1\right)\right),$$

où $DAC_{max}$ est une valeur constante déterminée correspondant à la valeur choisie du maximum que le coefficient d'anti-divergence $DAC(t)$ peut atteindre, où N est une seconde valeur constante déterminée correspondant à la valeur choisie du nombre d'acquisition d'images précédentes utilisées pour la détermination du coefficient d'anti-divergence $DAC(t)$, où $\theta_{rel}(t)$ est la valeur de tangage relatif, respectivement de roulis relatif, à l'instant t, et où $\theta_{AMR}$ est une troisième valeur constante déterminée correspondant à la valeur choisie du tangage relatif, respectivement du roulis relatif, à partir de laquelle le coefficient d'anti-divergence $DAC(t)$ devient nul.

Grâce à l'invention, il est possible de réaliser une estimation du tangage, respectivement du roulis, pouvant s'adapter à des environnements de conduite impliquant des variations rapides et de grande amplitude du tangage, respectivement du roulis, et éviter les risques de divergence de la valeur estimée.

Des modes de réalisation pris isolément ou en combinaison, prévoient en outre que :

- la valeur $DAC_{max}$ est une constante prédéterminée pour favoriser une évolution de la valeur estimée du tangage, respectivement du roulis, vers sa valeur de calibration ou vers sa valeur estimée par intégration.
- la valeur N est une constante prédéterminée pour obtenir une plus ou moins grande réactivité du coefficient d'anti-divergence $DAC(t)$ aux changements d'environnement du véhicule.
- la valeur $\theta_{AMR}$ est une constante prédéterminée pour fixer la valeur du tangage relatif, respectivement du roulis relatif, à partir de laquelle le coefficient d'anti-divergence $DAC(t)$ devient nul.
- la caméra embarquée dans un véhicule automobile est une caméra frontale de type monoculaire.

Dans un second aspect, l'invention a également pour objet un dispositif d'estimation dynamique du tangage, respectivement du roulis, d'une caméra embarquée dans un véhicule automobile, une valeur de calibration du tangage, respectivement du roulis, $\theta_{calib}$ étant connue à chaque instant, ledit dispositif comprenant des moyens pour :

- calculer, à un instant t, une valeur de tangage estimé, respectivement de roulis estimé, par intégration $\theta_{int}(t)$ égale à $\theta_{calib}(0) - \int_{1}^{t} \theta_{rel}(x)\,dx$, où $\theta_{calib}(0)$ est la valeur initiale de calibration du tangage, respectivement du roulis, au démarrage de la caméra à un instant t=0, et où $\theta_{rel}(t)$ est la valeur de tangage relatif, respectivement de roulis relatif, à l'instant t, égale à l'angle de tangage, respectivement de roulis, formé entre l'orientation de la caméra à cet instant t et l'orientation de la caméra à un instant déterminé précédent t-1 ; et,
- déterminer, par calcul, la valeur de tangage, respectivement de roulis, $\theta(t)$ à l'instant t telle que $\theta(t)$ est égale à $\theta_{int}(t)$ + $DAC(t) \times (\theta_{calib}(t) - \theta_{int}(t))$, où $\theta_{calib}(t)$ est la valeur de calibration du tangage, respectivement du roulis, à cet instant t, où $\theta_{int}(t)$ est la valeur calculée, à cet instant t, du tangage estimé, respectivement du roulis estimé, par intégration, et où $DAC(t)$ est un coefficient d'anti-divergence variable en fonction du temps tel que, à un instant t donné, $DAC(t)$ est égal à :

$$DAC_{max} \times \left(1 - \min\left(\int_{t-N}^{t} \frac{|\theta_{rel}(x)|}{\theta_{AMR}}\,dx, 1\right)\right),$$

où $DAC_{max}$ est une valeur constante déterminée correspondant à la valeur choisie du maximum que le coefficient d'anti-divergence $DAC(t)$ peut atteindre, où N est une seconde valeur constante déterminée correspondant à la valeur choisie du nombre d'acquisition d'images précédentes utilisées pour la détermination du coefficient d'anti-divergence $DAC(t)$, où $\theta_{rel}(t)$ est la valeur de tangage relatif, respectivement de roulis relatif, à l'instant t, et où $\theta_{AMR}$ est une troisième valeur constante déterminée correspondant à la valeur choisie du tangage relatif, respectivement du roulis relatif, à partir de laquelle le coefficient d'anti-divergence $DAC(t)$ devient nul.

Dans un troisième aspect, l'invention a également pour objet un système d'aide à la conduite automobile comprenant un dispositif conforme au dispositif selon le second aspect, apte à mettre en œuvre toutes les étapes du procédé selon l'un des modes de réalisation possible du premier aspect.

D'autres caractéristiques et avantages de l'invention apparaîtront encore à la lecture de la description qui va suivre. Celle-ci est purement illustrative et doit être lue en regard des dessins annexés sur lesquels :

- la **Figure 1A** est une représentation schématique d'un véhicule automobile équipé d'une caméra vidéo pour l'aide à la conduite ;
- La **figure 1B** une représentation schématique du véhicule automobile de la **figure 1A** (représenté uniquement par une roue et la caméra vidéo dont il est équipé) roulant sur un dos d'âne ;

- la **Figure 2A** montre un exemple d'évolution de l'orientation de la caméra relatif à l'angle de tangage,
- la **Figure 2B** montre un exemple d'évolution de l'orientation de la caméra relatif à l'angle de roulis,
- la **Figure 3A** montre un diagramme d'étape d'un mode de réalisation du procédé selon l'invention ; et,
- la **Figure 3B** montre un diagramme d'étape d'un autre mode de réalisation du procédé selon l'invention.

Dans la description de modes de réalisation qui va suivre et dans les figures des dessins annexés, les mêmes éléments ou des éléments similaires portent les mêmes références numériques aux dessins.

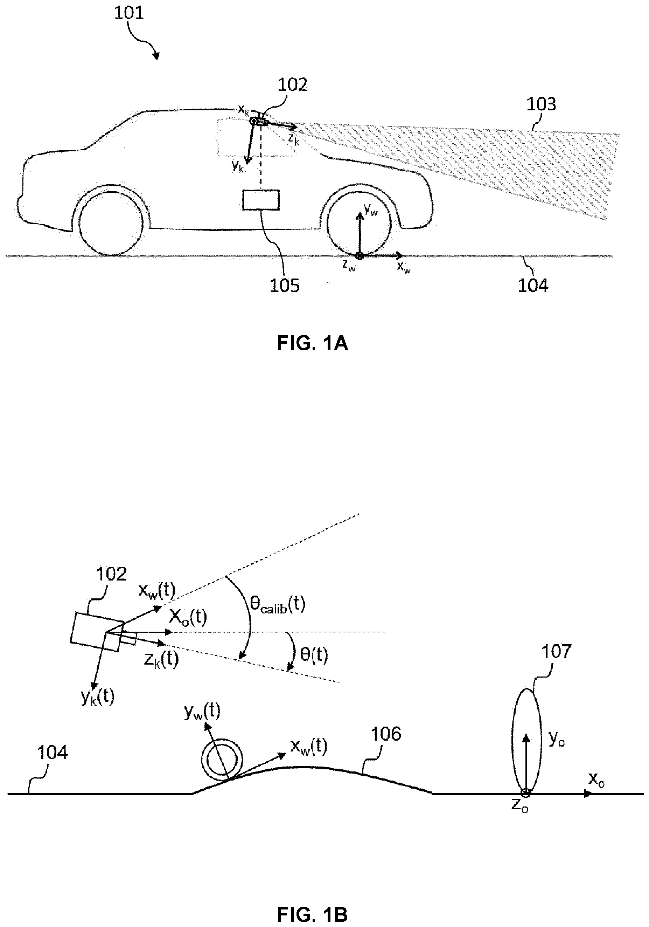

La **figure 1A** montre de façon schématique le fonctionnement d'une caméra vidéo 102 embarquée dans une voiture 101 pour fournir des images à un système d'aide à la conduite automobile, ADAS (non représenté).

Dans l'exemple représenté, la caméra est une caméra monoculaire frontale montée sur le pare-brise avant au niveau du rétroviseur central. Elle est apte à et agencée pour scruter l'environnement immédiat du véhicule automobile dans la direction de déplacement en marche avant. Il pourrait aussi s'agir, dans d'autres modes de réalisation d'une caméra fixée à l'arrière ou latéralement. La caméra vidéo fournissant des images numériques, celles-ci peuvent être analysées par un dispositif 105 (tel que, par exemple, une unité de traitement de l'ADAS) pour y détecter des objets et identifier des événements spécifiques. L'ADAS peut ainsi exploiter les informations contenues dans les images acquises par la caméra 102 afin de prendre une décision d'intervention active dans la conduite du véhicule ou de déclencher une action d'aide à la conduite pour l'utilisateur.

Par exemple, si un piéton rentre brusquement dans le champ de vision 103 de la caméra 102, et s'il est reconnu comme tel, alors l'ADAS pourra déclencher un freinage d'urgence. Dans un autre exemple, si un autre véhicule de trouve dans le champ de vision 103 de la caméra, l'unité de traitement de l'ADAS pourra, sur la base des images acquises, déterminer la distance séparant de ce véhicule et restituer cette information au conducteur du véhicule ou, le cas échéant, ralentir le véhicule 101 en cas de rapprochement trop brutal avec l'autre véhicule.

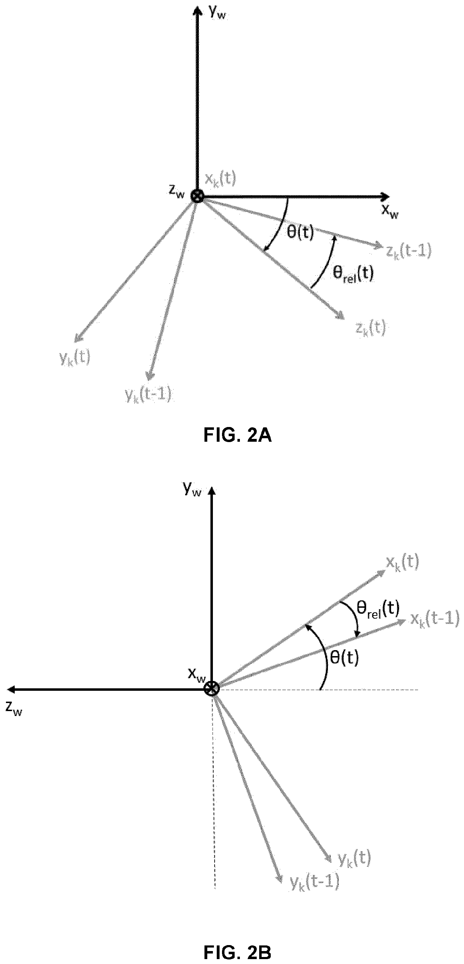

Ces exemples ne sont qu'une illustration non limitative des situations dans lesquelles l'utilisation d'une ou de plusieurs caméra(s) peut fournir des images à un ADAS à l'origine de la réalisation de certaines de ces fonctionnalités. Quoiqu'il en soit, et comme il a déjà été dit plus haut, la capacité de l'ADAS à accomplir correctement ces fonctionnalités repose, entre autres, sur une bonne appréciation de l'orientation de la caméra dont découle la bonne appréciation de la situation dans l'espace des objets observés. L'estimation du tangage et l'estimation du roulis s'inscrivent donc dans ce contexte. Deux repères tridimensionnels notés $\{x_k,y_k,z_k\}$ (appelé repère K, ou encore repère caméra) et $\{x_w,y_w,z_w\}$ (appelé repère W, ou repère monde) respectivement liés à la caméra 102 (avec une origine, par exemple, au centre de la caméra) et au sol 104 (avec une origine, par exemple, au point de contact entre une roue du véhicule et le sol), permettent d'établir une définition du tangage et du roulis tel qu'ils font l'objet de l'estimation. De manière générale, les angles de tangage et de roulis sont des angles de rotation entre des axes du repère caméra et des axes du repère monde. Comme il apparait plus clairement sur la **figure 2A,** la valeur absolue $\theta(t)$ de l'angle du tangage à un instant t est définie comme étant l'angle formé, à cet instant, entre l'axe $z_k$ du repère de la caméra et l'axe $x_w$ du repère monde. Respectivement, sur la **figure 2B,** la valeur absolue $\theta(t)$ de l'angle du roulis à un instant t est définie comme étant l'angle formé, à cet instant, entre l'axe $x_k$ du repère de la caméra et l'axe $z_w$ du repère monde.

L'homme du métier appréciera que le tangage et le roulis représentés ici et dont les estimations font l'objet de l'invention sont le tangage et le roulis extrinsèques, au sens défini plus haut à propos plus généralement des paramètres extrinsèques de la caméra. La variation éventuelle des paramètres intrinsèques, tels que définis plus haut, ne fait pas l'objet de l'estimation décrite ci-après. En effet, ces paramètres sont calibrés et, en général, pas soumis à des variations significatives dans des échelles de temps courtes. Ils peuvent donc être considérés comme stables aux regards des phénomènes dynamiques que le procédé d'estimation selon l'invention vise à suivre, qui sont liés à des évènements de conduite comme le passage sur un dos d'âne ou sur un cassis c'est-à-dire sur une brusque dénivellation convexe ou concave, respectivement, dans le cas du tangage, ou encore d'un coussin berlinois ou d'un nid de poule dans le cas du roulis, sur la chaussée d'une route.

Enfin, outre la réception et l'analyse des images numériques fournies par la caméra, le dispositif 105 représenté à la **figure 1A** intègre tous les moyens nécessaires pour réaliser l'ensemble des étapes du procédé d'estimation selon l'invention.

Le repère monde W est donc fixe par rapport au châssis du véhicule 101 avec son axe $x_w$ tangentiel au sol 104. Cependant, dans le cas d'une modification ponctuelle de la route, comme dans le cas d'un dos d'âne 106 ou d'un nid-de-poule, le repère monde W s'oriente selon les pentes et les creux de cette modification ponctuelle. Sur la **figure 1B,** le véhicule (représenté par une roue seulement) est représenté dans la pente ascendante d'un dos d'âne 106. Le repère monde W associé se retrouve donc basculé d'un angle qui l'éloigne du sol 104. Or les algorithmes de suivi spatio-temporel d'un objet 107 situé devant le véhicule 101 se basent sur une estimée de la position et de l'orientation de la caméra 102 par rapport à un repère tridimensionnel noté $\{x_o,y_o,z_o\}$ (appelé repère O, ou encore repère objet). Ce repère est associé à l'objet 107. Lorsque le sol est plat (sans creux ni bosse), le repère monde W est assimilé au repère objet O. Or, lors d'une modification ponctuelle de la route, comme dans le cas de dos d'âne 106 ou de nid-de-poule, le repère monde W diffère du repère objet O. Le procédé selon l'invention permet ainsi de faire fonctionner correctement les algorithmes de suivi spatio-temporel, par l'estimation de la position et de l'orientation de la caméra 102 par rapport au repère objet O, notamment lors de modifications ponctuelles de la route.

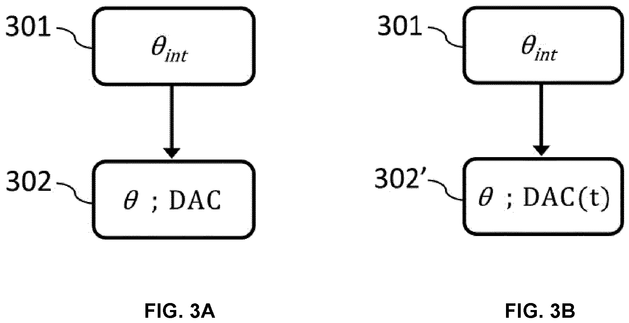

En référence à la **figure 3A** nous allons maintenant décrire un mode de réalisation du procédé selon l'invention.

La première étape 301 du procédé consiste à calculer une valeur dite de tangage estimée par l'intégration du mouvement de tangage inter-images de la caméra. Respectivement, dans le cas du roulis, la première étape 301 du procédé consiste à calculer une valeur dite de roulis estimée par l'intégration du mouvement de roulis inter-images de la caméra. Plus précisément, à un instant t, le tangage dit tangage relatif, respectivement le roulis dit roulis relatif, $\theta_{rel}(t)$ est intégré dans le temps depuis une origine temporelle coïncidant par exemple avec le démarrage de la caméra jusqu'à cet instant déterminé. Il est éventuellement ajouté à une valeur calibrée du tangage, respectivement du roulis, qui a été déterminée au moment du démarrage de la caméra. La valeur de ce tangage relatif, respectivement, la valeur de ce roulis relatif, à l'instant t est la valeur de l'angle de tangage, respectivement de roulis, formé entre l'orientation de la caméra à cet instant *t* et l'orientation de la caméra à un instant déterminé précédent t-1 dans le même repère. Par instant précédent, on entend par exemple l'instant de la précédente acquisition d'image par la caméra dans une séquence d'acquisitions successives, ou l'instant de l'acquisition d'une image séparée d'un nombre donné d'acquisitions (nombre par exemple choisi à l'avance) dans ladite séquence, ou encore l'instant d'acquisition d'une image antérieure acquise un certain temps donné avant l'instant *t*. Ainsi, à chaque instant t, la valeur de tangage estimé, respectivement de roulis estimé, par intégration est exprimée par l'expression mathématique suivante :

$$\theta_{int}(t) = \theta_{calib}(0) - \int_{1}^{t} \theta_{rel}(x)\, dx$$

où $\theta_{calib}(0)$ est la valeur initiale de calibration du tangage extrinsèque, respectivement du roulis extrinsèque, déterminée au démarrage de la caméra, c'est-à-dire à l'instant que l'on détermine comme étant l'origine temporelle, c'est-à-dire aussi le moment où *t=0*. Dans d'autres modes de réalisation, la valeur calibrée du tangage, respectivement du roulis, à l'instant considéré comme étant l'origine temporelle pourra être choisie en fin de chaîne de production du véhicule ou à tout autre moment de la vie du véhicule.

Des exemples d'évolution de l'orientation de la caméra sont donnés à la **figure 2A** dans le cas du tangage et à la **figure 2B** dans le cas du roulis, dans lesquels le repère K attaché à la caméra évolue entre les instants *t* et *t-1* relativement au repère monde W qui lui reste fixe. Dans les exemples montrés, le tangage relatif, respectivement le roulis relatif, $\theta_{rel}(t)$ est donc représenté entre ces deux instants.

La valeur de calibration du tangage, respectivement du roulis, en fonction du temps $\theta_{calib}(t)$ peut être obtenue suivant toute méthode de calibration du tangage, respectivement du roulis, extrinsèque connue, telles que, par exemple, la méthode SLAM ou le suivi des lignes blanches décrits en introduction de la présente description.

Selon un exemple de réalisation, le tangage relatif, respectivement le roulis relatif, $\theta_{rel}(t)$ est obtenu par calcul en faisant la différence de la valeur de calibration du tangage, respectivement du roulis, entre les instants t et t-1 :
$\theta_{rel}(t) = \theta_{calib}(t) - \theta_{calib}(t-1)$ Cependant, d'un point de vue algorithmique, le tangage relatif, respectivement le roulis relatif, $\theta_{rel}(t)$ est obtenu en utilisant des méthodes connues de vision par ordinateur par exemple basées sur un flot optique et mettant en œuvre un suivi spatio-temporel de points caractéristiques sur une image de la caméra entre deux instants.

Cette étape 301 permet de réaliser une estimation dynamique du tangage, respectivement du roulis, de la caméra, en réponse à des changements d'environnement ponctuels et de forte amplitude. Toutefois, à ce niveau, plusieurs limitations importantes subsistent.

En effet, l'angle de tangage, respectivement de roulis, estimé est relatif à l'orientation de départ de la caméra, déterminée au démarrage du véhicule automobile, et non à l'orientation actuelle liée à l'environnement de conduite courant. L'angle estimé peut alors diverger de la vraie valeur par accumulation dans le temps des erreurs d'estimation dans le tangage relatif inter-images, respectivement dans le roulis relatif inter-images. Ainsi lorsque des changements d'orientation subits et de forte amplitude se répètent ou lorsque la pente ou l'inclinaison de la route sur laquelle se trouve le véhicule au moment de l'estimation est différente de celle appréciée lors de son démarrage, chaque petite erreur susceptible de se produire dans l'estimation du tangage relatif, respectivement du roulis relatif, se cumule avec la précédente jusqu'à potentiellement créer un écart important avec la vraie valeur, lequel écart ne sera pas nécessairement résorbé par la suite.

L'étape 302 a pour objectif de surmonter partiellement ces limitations en introduisant l'utilisation, dans le calcul de la valeur estimé du tangage, respectivement du rolis, d'un coefficient dit coefficient d'anti-divergence ou *DAC* de l'anglais « *Drift Avoidance Coefficient* ». Cette étape consiste à calculer, à chaque instant *t,* la valeur estimée du tangage, respectivement du roulis, selon la relation suivante :

$$\theta(t) = \theta_{int}(t) + DAC \times (\theta_{calib}(t) - \theta_{int}(t))$$

où $\theta_{calib}(t)$ est la valeur de calibration du tangage, respectivement du roulis, obtenue à cet instant $t$ ; et,
où $\theta_{int}(t)$ est la valeur du tangage, respectivement du roulis, estimé par intégration calculée à l'étape 301.

Ainsi, en référence à la **figure 1B** :

- la valeur de calibration du tangage, respectivement du roulis, $\theta_{calib}$ par rapport au repère monde W, est connue à chaque instant, et
- la valeur de tangage, respectivement de roulis, est calculé par rapport au repère objet O.

Selon un premier mode de réalisation, le coefficient d'anti-divergence *DAC* est une valeur constante, comprise entre 0 et 1, dont le choix est réalisé en amont de la mise en œuvre du procédé, en fonction d'un équilibre recherché entre deux approches envisageables. En effet, selon la valeur attribuée au coefficient *DAC,* la valeur du tangage, respectivement du roulis, estimée accorde un poids plus ou moins prépondérant à sa valeur de calibration lors de son calcul. Par exemple, une valeur du coefficient proche de 1 implique une valeur estimée du tangage, respectivement du roulis, plus proche de sa valeur de calibration et, à l'inverse, une valeur du coefficient proche de 0 implique une valeur estimée du tangage, respectivement du roulis, plus proche du tangage, respectivement du roulis, estimé à l'instant t par intégration. Autrement dit, dans le cas par exemple, du franchissement rapide d'un dos d'âne, respectivement d'un coussin berlinois, une valeur de *DAC* plus faible (par exemple de 0,1) conduirait à une bonne estimation de la valeur du tangage, respectivement du roulis, de la caméra en permettant une bonne réactivité de l'estimation. Cependant, une valeur de *DAC* plus élevée (par exemple de 0,5) induirait une estimation moins performante dans le cas du franchissement rapide d'un dos d'âne, respectivement d'un coussin berlinois, mais plus performante dans le cas du franchissement d'une longue pente (par exemple d'au moins 50 mètres), respectivement d'une route inclinée sur une longue distance. En effet, ce choix de valeur conduirait à une estimation plus stable mais moins réactive.

Ainsi, dans ce mode de réalisation, l'utilisation du coefficient d'anti-divergence permet donc, suivant la valeur choisie, soit de bien prendre en compte des variations de l'angle du tangage, respectivement du roulis, rapides et de grande amplitude mais en conservant un risque de divergence potentiel par rapport à la valeur objective du tangage, respectivement du roulis, soit, à l'inverse, d'éviter tout risque de divergence mais en limitant la capacité de l'estimation à suivre des variations rapides et de grande amplitude du tangage, respectivement du roulis, de la caméra.

La **figure 3B** montre un autre mode de réalisation préféré et avantageux du procédé selon l'invention. Dans cet exemple, l'étape 301 est identique à celle du mode de réalisation du procédé décrit en référence à la **figure 3A.** En revanche, l'étape 302' repose dans ce cas sur l'utilisation d'un coefficient d'anti-divergence dynamique. L'idée est ici d'utiliser un coefficient d'anti-divergence adaptatif, dans le sens où la valeur de celui-ci peut être adaptée au mieux (et donc le comportement du procédé d'estimation peut être adapté au mieux) à la réalité de l'environnement de conduite.

Dans ce mode de réalisation, l'étape 302' consiste toujours à calculer, à chaque instant t, la valeur estimée du tangage, respectivement du roulis, selon la relation suivante :

$$\theta(t) = \theta_{int}(t) + DAC(t) \times (\theta_{calib}(t) - \theta_{int}(t))$$

où la valeur du coefficient d'anti-divergence *DAC(t)* est fonction du temps à travers la relation qui suit :

$$DAC(t) = DAC_{max} \times \left(1 - \min\left(\int_{t-N}^{t} \frac{|\dot{\theta}_{rel}(x)|}{\theta_{AMR}} dx, 1\right)\right)$$

où $DAC_{max}$, $N$ et $\theta_{AMR}$ sont des valeurs constantes déterminées.

Ces trois constantes peuvent être choisies pour contrôler à la fois la réactivité et la précision de l'estimation de la valeur du tangage, respectivement du roulis. Ainsi par exemple, la valeur $DAC_{max}$ peut correspondre à la valeur maximum que le coefficient d'anti-divergence *DAC(t)* peut atteindre. Autrement dit, suivant le choix qui est fait pour l'attribution de cette valeur $DAC_{max}$, la valeur estimée du tangage, respectivement du roulis, favorise préférentiellement soit sa valeur de calibration soit sa valeur estimée par intégration.

S'agissant de la valeur $N$, elle a pour objet de fixer le nombre d'acquisition d'images précédentes qui sont utilisées pour la détermination du coefficient d'anti-divergence *DAC(t)*. Ainsi, suivant la valeur choisie, il est possible d'ajuster la réactivité du coefficient d'anti-divergence dynamique *DAC(t)* aux changements d'environnement du véhicule.

Enfin, la valeur $\theta_{AMR}$ est la valeur (en valeur absolue) du tangage relatif, respectivement du roulis relatif, à partir de laquelle le coefficient d'anti-divergence *DAC(t)* devient nul. Au-delà de cette valeur de tangage relatif, respectivement de roulis relatif, du fait d'un *DAC(t)* nul, l'estimation devient très réactive et peut alors suivre de manière optimale des variations importantes et rapide de tangage, respectivement de roulis, telles que celles liées au franchissement de dos d'âne, respectivement au franchissement « asymétrique » d'un coussin berlinois, par exemple.

Ainsi, les constantes $DAC_{max}$, *N* et $\theta_{AMR}$ sont choisies sont des constantes dont les valeurs sont adaptées (choisies de manière prédéterminée).

Dès lors, par le choix de valeurs optimales régissant l'évolution du coefficient d'anti-divergence *DAC(t)*, l'estimation du tangage, respectivement du roulis, peut à la fois s'adapter à des environnements de conduite impliquant des variations rapides et de grande amplitude du tangage, respectivement du roulis, et éviter les risques de divergence de la valeur estimée. A contrario d'un *DAC* constant, et à titre d'exemple, le coefficient dynamique peut permettre une même précision de l'estimation du tangage lors du franchissement d'un dos d'âne ou en circulant sur une longue pente, respectivement du tangage lors du franchissement d'un coussin berlinois de manière « asymétrique » ou en circulant sur une route inclinée sur une longue distance.

Par exemple, dans un environnement de conduite impliquant peu de tangage, respectivement peu de roulis, faisant suite à une situation préalable ayant entraîné un tangage élevé, respectivement un roulis élevé, la valeur du coefficient *DAC(t)* tend vers $DAC_{max}$ sur la base des N dernières images acquises. Le calcul mis en œuvre fait alors converger rapidement la valeur estimée du tangage, respectivement du roulis, $\theta(t)$ vers sa valeur de calibration $\theta_{calib}(t)$.

A l'inverse, lors du franchissement d'un dos d'âne, respectivement lors d'un franchissement d'un coussin berlinois de manière « asymétrique », la variation significative de la valeur du tangage, respectivement de roulis, sur les *N* dernières images acquises entraîne une chute de la valeur du coefficient *DAC(t)*, et, par suite, le « basculement » vers une estimation plus réactive puisque principalement basée sur l'intégration de la valeur du tangage relatif, respectivement du roulis relatif, $\theta_{rel}(t)$.

L'introduction du coefficient d'anti-divergence dynamique dans l'estimation du tangage, respectivement du roulis, permet donc de garantir une estimation relativement stable pour les environnements de conduite stables, et une estimation plus réactive lorsque la variation du tangage, respectivement du roulis, est plus significative et offrant une valeur estimée ne divergeant pas, tout en restant relative à la réalité de la route plutôt qu'à sa valeur d'origine.

Enfin, l'homme du métier appréciera que les étapes 302 et 302' succédant à l'étape 301, respectivement pour les modes de réalisation relatifs aux **figures 3A et 3B,** peuvent être considérées comme concomitantes relativement à la durée des phénomènes observés. Autrement dit, le calcul, à chaque instant, des valeurs de $\theta_{int}(t)$ et $\theta(t)$ est quasi instantané relativement aux durées impliquées par les changements d'environnement de conduite.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés. La portée de l'invention est définie par les revendications annexées.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention. La portée de l'invention est définie par les revendications annexées.

## Revendications

**1.** Procédé d'estimation dynamique du tangage, respectivement du roulis, instantané d'une caméra embarquée dans un véhicule automobile, une valeur de calibration du tangage, respectivement du roulis, $\theta_{calib}$ étant connue à chaque instant, ledit procédé comprenant :

• le calcul, à un instant t, d'une valeur de tangage estimé, respectivement du roulis estimé, par intégration $\theta_{int}(t)$ égale à $\theta_{calib}(0) - \int_1^t \theta_{rel}(x)\,dx$, où $\theta_{calib}(0)$ est la valeur initiale de calibration du tangage, respectivement du roulis, au démarrage de la caméra à un instant *t=0*, et où $\theta_{rel}(t)$ est la valeur de tangage relatif, respectivement de roulis relatif, à l'instant *t*, égale à l'angle de tangage, respectivement de roulis, formé entre l'orientation de la caméra à cet instant t et l'orientation de la caméra à un instant déterminé précédent t-1 ; et,

• la détermination, par calcul, de la valeur de tangage, respectivement de roulis, $\theta(t)$ à l'instant t telle que $\theta(t)$

est égale à :

$$\theta_{int}(t) + DAC(t) \times (\theta_{calib}(t) - \theta_{int}(t)),$$

où $\theta_{calib}(t)$ est la valeur de calibration du tangage, respectivement du roulis, à cet instant $t$, où $\theta_{int}(t)$ est la valeur calculée, à cet instant $t$, du tangage estimé, respectivement du roulis estimé, par intégration, et où $DAC(t)$ est un coefficient d'anti-divergence variable en fonction du temps tel que, à un instant t donné, $DAC(t)$ est égal à :

$$DAC_{max} \times \left(1 - \min\left(\int_{t-N}^{t} \frac{|\theta_{rel}(x)|}{\theta_{AMR}} dx, 1\right)\right),$$

où $DAC_{max}$ est une valeur constante déterminée correspondant à la valeur choisie du maximum que le coefficient d'anti-divergence $DAC(t)$ peut atteindre, où N est une seconde valeur constante déterminée correspondant à la valeur choisie du nombre d'acquisition d'images précédentes utilisées pour la détermination du coefficient d'anti-divergence $DAC(t)$, où $\theta_{rel}(t)$ est la valeur de tangage relatif, respectivement de roulis relatif, à l'instant $t$, et où $\theta_{AMR}$ est une troisième valeur constante déterminée correspondant à la valeur choisie du tangage relatif, respectivement du roulis relatif, à partir de laquelle le coefficient d'anti-divergence $DAC(t)$ devient nul.

2. Procédé selon la revendication 1, dans lequel la valeur $DAC_{max}$ est une constante prédéterminée pour favoriser une évolution de la valeur estimée du tangage, respectivement du roulis, vers sa valeur de calibration ou vers sa valeur estimée par intégration.

3. Procédé selon l'une quelconque des revendications 1 et 2, dans lequel la valeur N est une constante prédéterminée pour obtenir une plus ou moins grande réactivité du coefficient d'anti-divergence $DAC(t)$ aux changements d'environnement du véhicule.

4. Procédé selon l'une quelconque des revendications 1 à 3, dans lequel la valeur $\theta_{AMR}$ est une constante prédéterminée pour fixer la valeur du tangage relatif, respectivement du roulis relatif, à partir de laquelle le coefficient d'anti-divergence $DAC(t)$ devient nul.

5. Procédé selon l'une quelconque des revendications 1 à 4, dans lequel la caméra embarquée dans un véhicule automobile est une caméra frontale de type monoculaire.

6. Dispositif d'estimation dynamique du tangage, respectivement du roulis, d'une caméra embarquée dans un véhicule automobile, une valeur de calibration du tangage, respectivement du roulis, $\theta_{calib}$ étant connue à chaque instant, ledit dispositif comprenant des moyens pour :

• calculer, à un instant t, une valeur de tangage estimé, respectivement de roulis estimé, par intégration $\theta_{int}(t)$ égale à $\theta_{calib}(0) - \int_{1}^{t} \theta_{rel}(x)\, dx$, où $\theta_{calib}(0)$ est la valeur initiale de calibration du tangage, respectivement du roulis, au démarrage de la caméra à un instant $t=0$, et où $\theta_{rel}(t)$ est la valeur de tangage relatif, respectivement de roulis relatif, à l'instant $t$, égale à l'angle de tangage, respectivement de roulis, formé entre l'orientation de la caméra à cet instant $t$ et l'orientation de la caméra à un instant déterminé précédent $t-1$ ; et,
• déterminer, par calcul, la valeur de tangage, respectivement de roulis, $\theta(t)$ à l'instant $t$ telle que $\theta(t)$ est égale à $\theta_{int}(t) + DAC(t) \times (\theta_{calib}(t) - \theta_{int}(t))$, où $\theta_{calib}(t)$ est la valeur de calibration du tangage, respectivement du roulis, à cet instant $t$, où $\theta_{int}(t)$ est la valeur calculée, à cet instant $t$, du tangage estimé, respectivement du roulis estimé, par intégration, et où $DAC(t)$ est un coefficient d'anti-divergence variable en fonction du temps tel que, à un instant $t$ donné, $DAC(t)$ est égal à :

$$DAC_{max} \times \left(1 - \min\left(\int_{t-N}^{t} \frac{|\theta_{rel}(x)|}{\theta_{AMR}} dx, 1\right)\right),$$

où $DAC_{max}$ est une valeur constante déterminée correspondant à la valeur choisie du maximum que le coefficient d'anti-divergence $DAC(t)$ peut atteindre, où N est une seconde valeur constante déterminée correspondant à la valeur choisie du nombre d'acquisition d'images précédentes utilisées pour la détermination du coefficient d'anti-divergence *DAC(t)*, où $\theta_{rel}(t)$ est la valeur de tangage relatif, respectivement de roulis relatif, à l'instant *t*, et où $\theta_{AMR}$ est une troisième valeur constante déterminée correspondant à la valeur choisie du tangage relatif, respectivement du roulis relatif, à partir de laquelle le coefficient d'anti-divergence *DAC(t)* devient nul.

**7.** Système d'aide à la conduite automobile comprenant un dispositif conforme au dispositif selon la revendication 6, apte à mettre en œuvre toutes les étapes du procédé selon l'une quelconque des revendications 1 à 5.

**Patentansprüche**

**1.** Verfahren zur dynamischen Schätzung des augenblicklichen Nickens bzw. Rollens einer an Bord eines Kraftfahrzeugs befindlichen Kamera, wobei ein Kalibrierungswert des Nickens bzw. Rollens $\theta_{calib}$ zu jedem Zeitpunkt bekannt ist, wobei das Verfahren enthält:

• die Berechnung, zu einem Zeitpunkt t, eines Werts geschätzten Nickens bzw. des geschätzten Rollens durch Integration $\theta_{int}(t)$ gleich $\theta_{calib}(0) - \int_1^t \theta_{rel}(x)dx$, wobei $\theta_{calib}(0)$ der Ausgangskalibrierungswert des Nickens bzw. des Rollens beim Start der Kamera zu einem Zeitpunkt t=0 ist, und wobei $\theta_{rel}(t)$ der Wert des relativen Nickens bzw. des relativen Rollens zum Zeitpunkt t gleich dem Nickwinkel bzw. dem Rollwinkel ist, der zwischen der Ausrichtung der Kamera zu diesem Zeitpunkt t und der Ausrichtung der Kamera zu einem vorhergehenden bestimmten Zeitpunkt t-1 geformt wird; und
• die Bestimmung, durch Berechnung, des Nickwerts bzw. des Rollwerts $\theta(t)$ zum Zeitpunkt t derart, dass $\theta(t)$ ist gleich:

$$\theta_{int}(t) + DAC(t) \times \left(\theta_{calib}(t) - \theta_{int}(t)\right)$$

wobei $\theta_{calib}(t)$ der Kalibrierungswert des Nickens bzw. des Rollens zu diesem Zeitpunkt t ist, wobei $\theta_{int}(t)$ der berechnete Wert zu diesem Zeitpunkt t des geschätzten Nickens bzw. geschätzten Rollens durch Integration ist, und wobei DAC(t) ein zeitabhängig variabler Antidivergenzkoeffizient ist, derart, dass zu einem gegebenen Zeitpunkt t DAC(t) ist gleich:

$$DAC_{max} \times \left(1 - min\left(\int_{t-N}^{t} \frac{|\theta_{rel}(x)|}{\theta_{AMR}}dx, 1\right)\right)$$

wobei $DAC_{max}$ ein bestimmter konstanter Wert ist, der dem gewählten Wert des Maximums entspricht, das der Antidivergenzkoeffizient DAC(t) erreichen kann, wobei N ein zweiter bestimmter konstanter Wert ist, der dem gewählten Wert der Erfassungsanzahl von vorhergehenden Bildern entspricht, die für die Bestimmung des Antidivergenzkoeffizienten DAC(t) verwendet werden, wobei $\theta_{rel}(t)$ der Wert relativen Nickens bzw. relativen Rollens zum Zeitpunkt t ist, und wobei $\theta_{AMR}$ ein dritter bestimmter konstanter Wert ist, der dem gewählten Wert des relativen Nickens bzw. des relativen Rollens entspricht, ab dem der Antidivergenzkoeffizient DAC(t) Null wird.

**2.** Verfahren nach Anspruch 1, wobei der Wert $DAC_{max}$ eine vorbestimmte Konstante ist, um eine Entwicklung des geschätzten Werts des Nickens bzw. des Rollens zu seinem Kalibrierungswert oder zu seinem geschätzten Wert durch Integration zu begünstigen.

**3.** Verfahren nach einem der Ansprüche 1 und 2, wobei der Wert N eine vorbestimmte Konstante ist, um eine mehr oder weniger große Reaktionsfähigkeit des Antidivergenzkoeffizienten DAC(t) auf die Umgebungsänderungen des Fahrzeugs zu erhalten.

**4.** Verfahren nach einem der Ansprüche 1 bis 3, wobei der Wert $\theta_{AMR}$ eine vorbestimmte Konstante ist, um den Wert des relativen Nickens bzw. des relativen Rollens festzulegen, ab dem der Antidivergenzkoeffizient DAC(t) Null wird.

**5.** Verfahren nach einem der Ansprüche 1 bis 4, wobei die an Bord eines Kraftfahrzeugs befindliche Kamera eine Frontkamera vom monokularen Typ ist.

**6.** Vorrichtung zur dynamischen Schätzung des Nickens bzw. des Rollens einer an Bord eines Kraftfahrzeugs befindlichen Kamera, wobei ein Kalibrierungswert des Nickens bzw. Rollens $\theta_{calib}$ zu jedem Zeitpunkt bekannt ist, wobei die Vorrichtung Einrichtungen enthält, um:

• zu einem Zeitpunkt t einen Wert geschätzten Nickens bzw. geschätzten Rollens durch Integration $\theta_{int}(t)$ gleich

$\theta_{calib}(0) - \int_1^t \theta_{rel}(x)dx$ zu berechnen, wobei $\theta_{calib}(0)$ der Ausgangskalibrierungswert des Nickens bzw. des Rollens beim Start der Kamera zu einem Zeitpunkt t=0 ist, und wobei $\theta_{rel}(t)$ der Wert relativen Nickens bzw. relativen Rollens zum Zeitpunkt t gleich dem Nickwinkel bzw. dem Rollwinkel ist, der zwischen der Ausrichtung der Kamera zu diesem Zeitpunkt t und der Ausrichtung der Kamera zu einem vorhergehenden bestimmten Zeitpunkt t-1 geformt wird; und
• den Wert des Nickens bzw. des Rollens $\theta(t)$ zum Zeitpunkt t durch Berechnung derart zu bestimmen, dass $\theta(t)$ gleich $\theta_{int}(t) + DAC(t) \times (\theta_{calib}(t) - \theta_{int}(t))$ ist, wobei $\theta_{calib}(t)$ der Kalibrierungswert des Nickens bzw. des Rollens zu diesem Zeitpunkt t ist, wobei $\theta_{int}(t)$ der berechnete Wert zu diesem Zeitpunkt t des geschätzten Nickens bzw. des geschätzten Rollens durch Integration ist, und wobei DAC(t) ein zeitabhängig variabler Antidivergenzkoeffizient ist, derart, dass zu einem gegebenen Zeitpunkt t DAC(t) ist gleich:

$$DAC_{max} \times \left(1 - min\left(\int_{t-N}^t \frac{|\theta_{rel}(x)|}{\theta_{AMR}} dx, 1\right)\right)$$

wobei $DAC_{max}$ ein bestimmter konstanter Wert ist, der dem gewählten Wert des Maximums entspricht, das der Antidivergenzkoeffizient DAC(t) erreichen kann, wobei N ein zweiter bestimmter konstanter Wert ist, der dem gewählten Wert der Erfassungsanzahl von vorhergehenden Bildern entspricht, die für die Bestimmung des Antidivergenzkoeffizienten DAC(t) verwendet werden, wobei $\theta_{rel}(t)$ der Wert des relativen Nickens bzw. des relativen Rollens zum Zeitpunkt t ist, und wobei $\theta_{AMR}$ ein dritter bestimmter konstanter Wert ist, der dem gewählten Wert des relativen Nickens bzw. des relativen Rollens entspricht, ab dem der Antidivergenzkoeffizient DAC(t) Null wird.

**7.** Kraftfahrzeug-Fahrhilfesystem, das eine Vorrichtung entsprechend der Vorrichtung nach Anspruch 6 enthält, die alle Schritte des Verfahrens nach einem der Ansprüche 1 bis 5 durchführen kann.

**Claims**

**1.** Method for dynamically estimating the instantaneous pitch and respectively roll of a camera located onboard a motor vehicle, a calibration value of the pitch and respectively roll, $\theta_{calib}$, being known at each time, said method comprising:

• computing, at a time t, a value of estimated pitch and respectively estimated roll, by integration, $\theta_{int}(t)$ equal

to $\theta_{calib}(0) - \int_1^t \theta_{rel}(x)dx$, where $\theta_{calib}(0)$ is the initial calibration value of the pitch and respectively roll on turn-on of the camera at a time $t = 0$, and where $\theta_{rel}(t)$ is the value of relative pitch and respectively relative roll at the time $t$, equal to the angle of pitch and respectively roll made between the orientation of the camera at this time $t$ and the orientation of the camera at a prior defined time $t - 1$; and
• determining, by computation, the value of pitch and respectively roll $\theta(t)$ at the time t, such that $\theta(t)$ is equal to:

$$\theta_{int}(t) + DAC(t) \times (\theta_{calib}(t) - \theta_{int}(t)),$$

where $\theta_{calib}(t)$ is the calibration value of the pitch and respectively roll at this time t, where $\theta_{int}(t)$ is the value computed, at this time t, of the estimated pitch and respectively estimated roll, by integration, and where $DAC(t)$ is a time-dependent anti-divergence coefficient such that, at a given time $t$, $DAC(t)$ is equal to:

$$DAC_{max} \times \left( 1 - min \left( \int_{t-N}^{t} \frac{|\theta_{rel}(x)|}{\theta_{AMR}} dx, 1 \right) \right)$$

where $DAC_{max}$ is a defined constant value corresponding to the chosen value of the maximum that the anti-divergence coefficient $DAC(t)$ may reach, where $N$ is a second defined constant value corresponding to the chosen value of the number of acquisition of prior images used to determine the anti-divergence coefficient $DAC(t)$, where $\theta_{rel}(t)$ is the value of relative pitch and respectively relative roll, at the time t, and where $\theta_{AMR}$ is a third defined constant value corresponding to the chosen value, of the relative pitch and respectively relative roll, from which the anti-divergence coefficient $DAC(t)$ becomes zero.

2. Method according to Claim 1, wherein the value $DAC_{max}$ is a constant defined beforehand to promote an progression of the estimated value of the pitch and respectively roll toward its calibration value or towards its value estimated by integration.

3. Method according to either one of Claims 1 and 2, wherein the value $N$ is a constant defined beforehand to obtain a relatively high or low reactivity of the anti-divergence coefficient $DAC(t)$ to changes in the environment of the vehicle.

4. Method according to any one of Claims 1 to 3, wherein the value $\theta_{AMR}$ is a constant defined beforehand to set the value of the relative pitch and respectively relative roll, from which the anti-divergence coefficient $DAC(t)$ becomes zero.

5. Method according to any one of Claims 1 to 4, wherein the camera located onboard a motor vehicle is a front-facing monocular camera.

6. Device for dynamically estimating the pitch and respectively roll of a camera located onboard a motor vehicle, a calibration value of the pitch and respectively roll, $\theta_{calib}$, being known at each time, said device comprising means for:

• computing, at a time $t$, a value of estimated pitch and respectively estimated roll, by integration, $\theta_{int}(t)$ equal to $\theta_{calib}(0) - \int_{1}^{t} \theta_{rel}(x)dx$, where $\theta_{calib}(0)$ is the initial calibration value of the pitch and respectively roll on turn-on of the camera at a time $t = 0$, and where $\theta_{rel}(t)$ is the value of relative pitch and respectively relative roll at the time $t$, equal to the angle of pitch and respectively roll made between the orientation of the camera at this time $t$ and the orientation of the camera at a prior defined time $t - 1$; and
• determining, by computation, the value of pitch and respectively roll $\theta(t)$ at the time $t$, such that $\theta(t)$ is equal to:

$$\theta_{int}(t) + DAC(t) \times (\theta_{calib}(t) - \theta_{int}(t)),$$

where $\theta_{calib}(t)$ is the calibration value of the pitch and respectively roll at this time $t$, where $\theta_{int}(t)$ is the value computed, at this time $t$, of the estimated pitch and respectively estimated roll, by integration, and where $DAC(t)$ is a time-dependent anti-divergence coefficient such that, at a given time $t$, $DAC(t)$ is equal to:

$$DAC_{max} \times \left( 1 - min \left( \int_{t-N}^{t} \frac{|\theta_{rel}(x)|}{\theta_{AMR}} dx, 1 \right) \right)$$

where $DAC_{max}$ is a defined constant value corresponding to the chosen value of the maximum that the anti-divergence coefficient $DAC(t)$ may reach, where $N$ is a second defined constant value corresponding to the chosen value of the number of acquisition of prior images used to determine the anti-divergence coefficient $DAC(t)$, where $\theta_{rel}(t)$ is the value of relative pitch and respectively relative roll, at the time $t$, and where $\theta_{AMR}$ is a third defined constant value corresponding to the chosen value, of the relative pitch and respectively relative roll, from which the anti-divergence coefficient $DAC(t)$ becomes zero.

7. System for assisting with motor-vehicle driving, comprising a device in accordance with the device according to Claim 6, able to implement all the steps of the method according to any one of Claims 1 to 5.

**FIG. 1A**

**FIG. 1B**

**FIG. 2A**

**FIG. 2B**

301 $\theta_{int}$

302 $\theta$ ; DAC

**FIG. 3A**

301 $\theta_{int}$

302' $\theta$ ; DAC(t)

**FIG. 3B**